# FASCICULE DE BREVET EUROPEEN

(11) **EP 3 776 814 B1**
(45) Date de publication et mention de la délivrance du brevet: **16.08.2023**
(21) Numéro de dépôt: 19714222.7
(22) Date de dépôt: 04.04.2019
(51) Int. Cl.: H02K 3/52, H02K 7/04, H02K 15/16, H02K 1/24

(54) **ROTOR DE MACHINE ÉLECTRIQUE SYNCHRONE DE TYPE À ROTOR BOBINÉ**
GEWICKELTER ROTOR FÜR EINE ELEKTRISCHE SYNCHRONMASCHINE
WOUND-TYPE ROTOR FOR A SYNCHRONOUS ELECTRIC MACHINE

(30) Priorité: 12.04.2018 FR 1853220
(43) Date de publication de la demande: 17.02.2021
(73) Titulaire: Renault s.a.s, 92100 Boulogne Billancourt (FR); NISSAN MOTOR CO., LTD., Yokohama-shi, Kanagawa 221-0023 (JP)
(72) Inventeur: TAVAKOLI, Shahab, 92420 VAUCRESSON (FR); PRESSOIR, Joel, 27520 Grand-Bourgtheroulde (FR)
(74) Mandataire: Renault Group
(86) Numéro de dépôt international: PCT/EP2019/058486
(87) Numéro de publication internationale: WO 2019/197266

(56) Documents cités:
- WO-A1-2012/007920
- WO-A1-2017/194254
- DE-A1-102011 121 793
- FR-A1- 2 792 981
- FR-A1- 2 984 034
- FR-A1- 2 984 626
- JP-A- S5 947 954
- JP-A- S56 141 759

## Description

La présente invention concerne le domaine des machines électriques synchrones à rotor bobiné. Elle concerne plus particulièrement un rotor de machine électrique synchrone de type à rotor bobiné, comportant un arbre de rotor destiné à être monté rotatif autour de son axe, un paquet de tôles monté coaxialement sur l'arbre de rotor, ledit paquet de tôles comportant une pluralité de pôles saillants radialement et au moins une ouverture axiale, un bobinage de fils électriquement conducteur étant destiné à être enroulé autour de chaque pôle, des têtes de guidage des fils électriquement conducteur autour de chaque pôle étant agencées axialement de part et d'autre du paquet de tôles, chaque tête de guidage étant munie d'un orifice central pour le passage de l'arbre.

Un domaine d'application de l'invention est celui des machines électriques utilisées dans les véhicules automobiles de type électrique ou hybride.

Le document de brevet FR 2 984 034 fait connaître un rotor bobiné, notamment utilisé dans une machine électrique pour un véhicule automobile à traction électrique, intégrant un dispositif de guidage pour fixer les fils des bobinages autour des pôles réalisés par un empilement de tôles.

Les rotors à haute vitesse sont soumis à des conditions de fonctionnement difficiles et notamment à de fortes sollicitations dans le sens radial. En particulier, les bobinages du rotor sont soumis à de fortes forces centrifuges pendant le fonctionnement du rotor et doivent être bien maintenus. Les deux têtes de guidage des fils du bobinage (on parle aussi de « guide tête de bobine ») sont également très sollicitées lors de la rotation du rotor par la force centrifuge et doivent donc être adaptées pour fonctionner dans de telles conditions. Aussi, chaque tête de guidage est classiquement solidaire d'une couronne, qui est une pièce indépendante du corps du rotor, disposée à la périphérie extérieure d'une tête de guidage, de sorte à former un moyen de maintien radial de la tête de guidage. Plus précisément, la couronne présente une configuration annulaire autour de la périphérie extérieure de la tête de guidage, son profil comportant une forme en L comportant une aile orientée axialement et s'appuyant sur la périphérie extérieure de la tête de guidage et une aile orientée radialement vers l'axe et s'appuyant sur une face radiale d'extrémité de chaque pôle de la tête de guidage. De façon à permettre la fixation de la couronne à la tête de guidage, la couronne comporte des orifices au niveau de son aile radiale, destinés à permettre le passage de tirants. Les faces radiales d'extrémité des pôles de la tête de guidage et le paquet de tôles comportent des orifices correspondant, de manière que les tirants puissent traverser axialement la couronne, la tête de guidage et le paquet de tôles jusqu'au côté opposé du rotor, où un écrou de blocage est vissé à l'extrémité libre de chaque tirant débouchant de la couronne opposée. Lorsque l'écrou est serré avec un couple suffisant, typiquement jusqu'à la limite plastique du tirant, l'ensemble est maintenu fermement pour rester assemblé lorsque le rotor est soumis à de fortes forces centrifuges.

Cependant, cet agencement de couronnes pour le maintien radial des têtes de guidage requiert un nombre de pièces important, à savoir les couronnes elles-mêmes, les tirants et écrous, conduisant in fine à un surcroît de poids. En outre, cet agencement requiert un nombre important d'opérations d'assemblage (passage des tirants, opérations de vissage des écrous), qu'il est souhaitable de chercher à réduire.

Eventuellement, en vue d'équilibrer le rotor, un anneau d'équilibrage peut être fixé sur le côté externe de l'aile radiale de la couronne, cet anneau étant pourvu de cavités réparties circonférentiellement autour de celui-ci. L'opération d'équilibrage du rotor consiste à insérer des masses d'équilibrage dans certaines des cavités qui sont réparties circonférentiellement ou bien à enlever de la matière de l'anneau, par perçage de l'anneau. Cependant, ce dispositif d'équilibrage présente un inconvénient en ce que les masses d'équilibrage sont installées sur un anneau d'équilibrage. Cela nécessite par conséquent la présence d'un anneau, au détriment du poids, ainsi qu'une opération de fixation de cet anneau d'équilibrage sur la couronne.

Le document JPS5614759A divulgue une méthode d'assemblage de rotor dans laquelle des faces d'extrémité sont rapportées sur l'empilement de tôles du rotor, des guides têtes de bobines étant ensuite emboîtées sur ces faces d'extrémité. Des flasques viennent compléter le montage du rotor de part et d'autre et sont fixées par des tirants.

Dans ce contexte, la présente invention a pour but de proposer un rotor exempt des limitations précédemment évoquées.

A cette fin, le rotor de l'invention, par ailleurs conforme à la définition générique qu'en donne le préambule ci-dessus, est essentiellement caractérisé en ce qu'il comprend un support de tête de guidage inséré entre ledit paquet de tôles et chaque tête de guidage de manière qu'une face radiale interne dudit support est en appui contre une face radiale externe d'extrémité axiale dudit paquet de tôles, et qu'une surface périphérique dudit support faisant saillie axialement vers l'extérieur à partir de sa face radiale interne soit en contact avec une face de contact de ladite tête de guidage orientée radialement vers l'extérieur de celle-ci, de sorte que ladite tête de guidage est en butée radialement contre ladite surface périphérique dudit support, et en ce que ledit support de tête de guidage est fixé par frettage sur l'arbre de rotor.

De préférence, ladite tête de guidage est fixée par frettage sur ledit support de tête de guidage.

Alternativement ou de façon complémentaire, ladite tête de guidage est fixée par frettage sur l'arbre de rotor.

Avantageusement, ladite surface périphérique dudit support de tête de guidage présente un bord externe adapté pour dépasser axialement un bord externe de ladite face de contact de ladite tête de guidage, de telle sorte à permettre l'ajout de masses d'équilibrage (par points de soudure par exemple) dans une zone située entre les bords externes respectifs de ladite face de contact de ladite tête de guidage et de ladite surface périphérique dudit support de tête de guidage, pour l'équilibrage du rotor.

De préférence, chaque tête de guidage est pourvue sur une face externe de celle-ci, opposée audit support de tête de guidage par rapport à ladite tête de guidage, de cavités réparties circonférentiellement, ouvertes axialement vers l'extérieur de ladite tête de guidage, lesdites cavités étant adaptées à recevoir des masses d'équilibrage pour l'équilibrage du rotor (par injection d'une matière dense, par exemple par injection d'une matière plastique à haute densité).

Avantageusement, chacune desdites têtes de guidage comprenant une pluralité de branches s'étendant radialement depuis une âme cylindrique centrale pourvue dudit orifice central, chacune desdites cavités s'étend circonférentiellement entre deux branches de ladite tête de guidage.

Avantageusement, ledit support de tête de guidage est réalisé en une pièce monobloc, en alliage d'aluminium ou d'acier. Ledit support est préférentiellement obtenu par emboutissage, usinage ou fonderie.

L'invention concerne également un procédé de montage d'un rotor tel que décrit ci-dessus, ledit procédé comprenant :
une étape d'assemblage par frettage de chacun desdits supports de tête de guidage sur l'arbre de rotor de part et d'autre dudit paquet de tôle, en même temps que l'assemblage par frettage dudit paquet de tôles sur ledit l'arbre de rotor,
une étape de montage de ladite tête de guidage sur chacun desdits supports de tête de guidage assemblés de part et d'autre dudit paquet de tôles, et
une étape de bobinage de fils électriquement conducteurs autour de chaque pôle par l'intermédiaire desdites têtes de guidage.

Un tel procédé de montage est particulièrement simple à mettre en oeuvre.

Avantageusement, le procédé peut également comporter une étape d'équilibrage du rotor par ajout de matière dans des cavités prévues sur les têtes de guidage et/ou sur des zones prévues entre des bords externes respectifs de ladite face de contact de ladite tête de guidage et de ladite surface périphérique dudit support de tête de guidage, ledit bord externe de ladite surface périphérique dudit support de tête de guidage dépassant axialement ledit bord externe de ladite face de contact de ladite tête de guidage.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 représente schématiquement une vue en perspective d'un rotor de moteur électrique selon l'invention ;
- la Figure 2 est une vue de détail du rotor de la figure 1, en perspective éclatée, illustrant de façon isolée la tête de guidage et son support, avant positionnement de la tête dans le support.

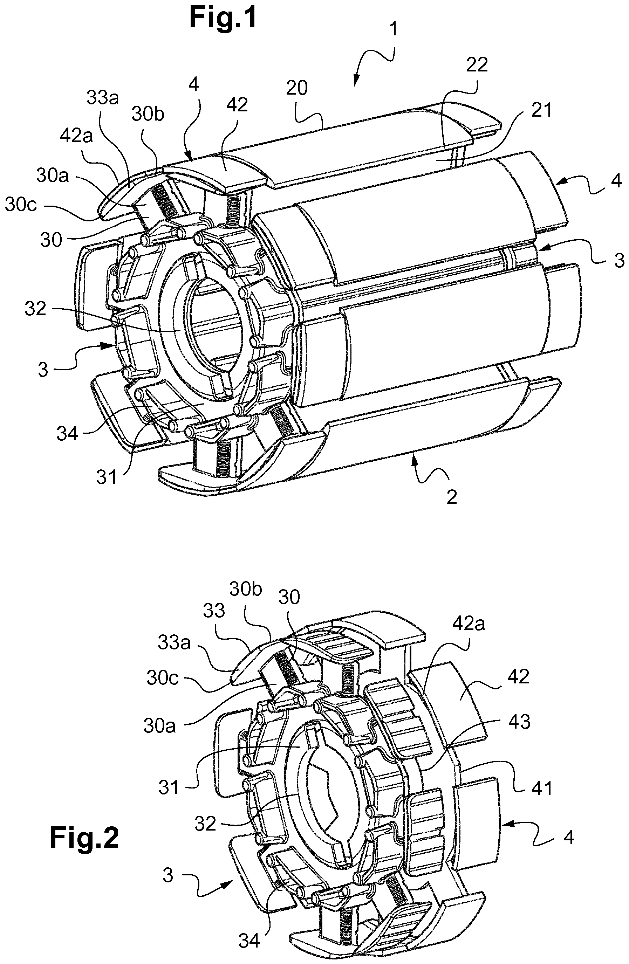

La Figure 1 illustre un rotor 1 de machine électrique. Le rotor 1 comprend un arbre (non représenté), qui s'étend axialement à travers le rotor.

Un paquet de tôles 2 est monté coaxialement sur l'arbre de rotor. Ce paquet de tôles 2 est formé d'un empilement axial de tôles, qui s'étendent dans un plan radial perpendiculaire à l'axe de l'arbre de rotor. Dans ce plan radial, les tôles du paquet de tôles ont toutes un contour identique. Ce paquet de tôles comporte des pôles saillants 20, qui sont répartis régulièrement selon une direction circonférentielle et saillants de l'arbre vers la périphérie extérieure du rotor. Dans l'exemple de réalisation décrit en référence aux figures, le paquet de tôles comporte huit pôles saillants 20. Toutefois, l'invention n'est pas limitée à ce type de configuration et s'applique pour un paquet de tôles comportant une pluralité de pôles saillants et, préférentiellement, au moins trois pôles.

Le paquet de tôles 2 est monté par frettage sur la surface externe cylindrique de l'arbre du rotor. Ainsi, on monte à chaud le paquet de tôles 2 par emmanchement sur la surface externe cylindrique de l'arbre du rotor.

Chaque pôle 20 est constitué d'un bras 21 qui s'étend radialement vers la périphérie extérieure du rotor. L'extrémité libre 22 du pôle 20 se termine par un retour saillant circonférentiellement de part et d'autre du bras 21. La fonction du retour saillant 22 de chaque pôle 20 est de retenir dans la direction radiale un bobinage d'excitation électriquement conducteur, qui est enroulé autour du bras radial 21 de chaque pôle 20, à l'encontre de la force centrifuge subie par le bobinage d'excitation lors de la rotation du rotor.

Chaque pôle 20 comporte ainsi un bobinage d'excitation. Des têtes de guidage 3 sont montées coaxialement à l'arbre du rotor de part et d'autre du paquet de tôles 2, pour guider des fils conducteurs constituant le bobinage d'excitation autour de chaque pôle 20. Chaque tête de guidage 3 disposée de part et d'autre du paquet de tôles 2, a globalement la forme d'un disque s'étendant dans un plan radial perpendiculaire à l'axe de l'arbre du rotor. Les têtes de guidage 3 sont monoblocs et réalisées préférentiellement en matériau plastique à haute tenue mécanique et sont obtenues par exemple par moulage, par exemple d'un matériau plastique thermodurcissable.

Ainsi dans l'exemple illustré sur les figures, chaque tête de guidage 3 comprend huit branches 30 s'étendant radialement depuis une âme cylindrique centrale 31, pourvue d'un orifice central 32 pour le montage coaxial sur l'arbre, chaque branche radiale 30 de la tête de guidage 3 étant destinée à être positionnée en regard d'un pôle respectif du 20 du rotor 1, de sorte à permettre le bobinage. Plus précisément, chaque branche 30 comporte une portion principale 30a, destinée à recevoir un ensemble de fils conducteurs, ladite portion principale 30a étant disposée en regard d'un bras radial 21 de chaque pôle 20 du paquet de tôles 2 du rotor 1 et étant délimitée à son extrémité opposée à l'âme cylindrique centrale 31 par deux épaulements 30b, 30c, disposés en regard du retour 22 saillant circonférentiellement de part et d'autre du bras 21 de chaque pôle. Le fil conducteur du bobinage d'excitation de chaque pôle est donc bobiné autour de la portion principale 30a de la branche correspondante de la tête de guidage entre les deux épaulements 30b, 30c selon une direction parallèle aux épaulements 30b, 30c.

Telle qu'illustré sur les figures, les têtes de guidage 3 des fils électriquement conducteurs autour des pôles, qui sont disposées axialement de part et d'autre du paquet de tôles 2, ne sont pas directement en contact avec le paquet de tôles 2. Ainsi, conformément à l'invention, un support de tête de guidage 4 est intercalé entre le paquet de tôles 2 et chaque tête de guidage 3. Le support de tête de guidage 4 comporte une face radiale interne 41, s'étendant dans un plan radial perpendiculaire à l'axe de l'arbre du rotor et pourvue d'un orifice central 43 pour le montage coaxial sur l'arbre, destinée à venir en appui contre une face radiale externe d'extrémité axiale du paquet de tôles 2, et une surface périphérique 42, faisant saillie axialement vers l'extérieur à partir de la face radiale interne 41, destinée à venir en contact avec une face de contact 33 de la tête de guidage 3, qui est orientée radialement vers l'extérieur de celle-ci, lorsque la tête de guidage est positionnée dans son support, de sorte que la tête de guidage 3 est en butée radialement contre la surface périphérique 42 du support. Cette face de contact 33 des têtes de guidage 3 est constituée par les surfaces externes périphériques s'étendant circonférentiellement le long des deux épaulements 30b, 30c des branches 30 de la tête de guidage 3. Ainsi, les supports de tête de guidage 4, disposés axialement de part et d'autre du paquet de tôles 2 de manière que les faces radiales internes 41 de ces supports 4 soient en appui contre les faces radiales externes d'extrémité axiales du paquet de tôles 2, définissent un logement d'accueil annulaire respectif pour une tête de guidage 3 du rotor 1, délimité extérieurement par la surface périphérique 42 faisant saillie axialement vers l'extérieur à partir de la face radiale interne 41. La tête de guidage 3 est donc prévue pour venir en butée radialement vers l'extérieur contre une face interne de la surface périphérique 42 du support 4, qui s'étend axialement vers l'extérieur à partir de la face radiale interne 41 du support 4 en contact avec le paquet de tôles 2.

Le support de tête de guidage 4 est fixé par frettage sur l'arbre de rotor en même temps que le paquet de tôles 2 est fretté sur l'arbre de rotor.

Le support de tête de guidage 4 est conçu en une pièce monobloc, obtenue par exemple par moulage ou forgeage, ou encore par emboutissage de tôle. Il est réalisé préférentiellement en alliage d'aluminium ou d'acier. Une telle réalisation dudit support permet de faciliter le frettage du support sur l'arbre du rotor.

Une fois le support de tête de guidage 4 fixé sur l'arbre, la tête de guidage 3 est positionné dans son support 4 avant l'opération de bobinage des fils autour des pôles du rotor.

La tête de guidage 3 peut être assemblée par frettage sur le support de tête de guidage 4. Autrement dit, les deux surfaces concentriques, respectivement la surface périphérique 42 du support 4, située à l'extérieur, et la surface périphérique 33 de la tête de guidage 3, située à l'intérieur, sont jointes par frettage. Alternativement ou de façon complémentaire, la tête de guidage 3 est fixée par frettage sur l'arbre de rotor. Une fois assemblé, le support de tête de guidage 4 constitue un renfort pour la tête de guidage 3 contre les efforts radiaux importants imposés aux bobines du rotor lors du fonctionnement de celui-ci. Autrement dit, le support de tête de guidage 4 remplace avantageusement la couronne utilisée actuellement à cet effet, ce qui permet par conséquent de supprimer les tirants et écrous précédemment utilisés pour la fixation d'une telle couronne et partant, les opérations de vissage associées.

En outre, l'opération d'équilibrage du rotor 1 peut avantageusement être mise en oeuvre sans nécessiter d'anneau d'équilibrage. En effet, on prévoit avantageusement que la surface périphérique 42 du support de tête de guidage 4 présente un bord externe 42a, qui dépasse axialement d'un bord externe 33a de la face de contact 33 de la tête de guidage 3 lorsque cette dernière est positionnée dans le support 4, de telle sorte que l'opération d'équilibrage peut être assurée par ajout de masses d'équilibrage dans la zone située entre les bords externes respectifs de la face de contact 33 de la tête de guidage 3 et de la surface périphérique 42 du support de tête de guidage 4 dépassant axialement, par ajout de matière par exemple par injection d'une matière plastique à haute densité ou bien en ajoutant de la masse par point de soudure sur la surface 42a. En outre, chaque tête de guidage 3 peut être pourvue sur une face externe de celle-ci, opposée au support 4 par rapport à la tête de guidage 3, de cavités 34 réparties circonférentiellement, ouvertes axialement vers l'extérieur de la tête de guidage. Préférentiellement, chaque cavité 34 s'étend circonférentiellement entre deux branches 30 de la tête de guidage 3. Ainsi, alternativement ou de façon complémentaire, l'opération d'équilibrage du rotor 1 consiste à insérer des masses d'équilibrage ou bien à injecter une matière dense, par exemple de la matière plastique dense, dans certaines des cavités 34 de la tête de guidage 3, qui sont réparties circonférentiellement entre les branches 30 de la tête de guidage 3.

## Revendications

1. Rotor (1) de machine électrique synchrone de type à rotor bobiné, comportant un arbre de rotor destiné à être monté rotatif autour de son axe, un paquet de tôles (2) monté coaxialement sur l'arbre de rotor, ledit paquet de tôles comportant une pluralité de pôles (20) saillants radialement et au moins une ouverture axiale, un bobinage de fils électriquement conducteur étant destiné à être enroulé autour de chaque pôle, des têtes de guidage (3) des fils électriquement conducteur autour de chaque pôle étant agencées axialement de part et d'autre du paquet de tôles, chaque tête de guidage (3) étant munie d'un orifice central (32) pour le passage de l'arbre, dans lequel ledit rotor comprend un support de tête de guidage (4) inséré entre ledit paquet de tôles (2) et chaque tête de guidage (3) de manière qu'une face radiale interne (41) dudit support (4) est en appui contre une face radiale externe d'extrémité axiale dudit paquet de tôles (2), et dans lequel une surface périphérique (42) dudit support faisant saillie axialement vers l'extérieur à partir de sa face radiale interne soit en contact avec une face de contact (33) de ladite tête de guidage (3) orientée radialement vers l'extérieur de celle-ci, de sorte que ladite tête de guidage est en butée radialement contre ladite surface périphérique (42) dudit support (4), ledit rotor étant **caractérisé en ce que** ledit support de tête de guidage (4) est fixé par frettage sur l'arbre de rotor.

2. Rotor selon la revendication 1, **caractérisé en ce que** ladite tête de guidage (3) est fixée par frettage sur ledit support de tête de guidage.

3. Rotor selon l'une quelconque des revendications précédentes **caractérisé en ce que** ladite tête de guidage (3) est fixée par frettage sur l'arbre de rotor.

4. Rotor selon l'une quelconque des revendications précédentes, **caractérisé en ce que** ladite surface périphérique (42) dudit support de tête de guidage (4) présente un bord externe (42a) adapté pour dépasser axialement un bord externe (33a) de ladite face de contact (33) de ladite tête de guidage (3), de telle sorte à permettre l'ajout de masses d'équilibrage dans une zone située entre les bords externes respectifs de ladite face de contact (33) de ladite tête de guidage (3) et de ladite surface périphérique (42) dudit support de tête de guidage (4), pour l'équilibrage du rotor.

5. Rotor selon l'une quelconque des revendications précédentes, **caractérisé en ce que** chaque tête de guidage (3) est pourvue sur une face externe de celle-ci, opposée audit support de tête de guidage (4) par rapport à ladite tête de guidage (3), de cavités (34) réparties circonférentiellement, ouvertes axialement vers l'extérieur de ladite tête de guidage, lesdites cavités (34) étant adaptées à recevoir des masses d'équilibrage pour l'équilibrage du rotor.

6. Rotor selon la revendication 5, **caractérisé en ce que**, chaque tête de guidage (3) comprenant une pluralité de branches (30) s'étendant radialement depuis une âme cylindrique centrale (31) pourvue dudit orifice central (32), chacune desdites cavités (34) s'étend circonférentiellement entre deux branches (30) de ladite tête de guidage (3).

7. Rotor selon l'une quelconque des revendications précédentes, **caractérisé en ce que** ledit support de tête de guidage (4) est réalisé en une pièce monobloc, en alliage d'aluminium ou d'acier.

8. Procédé de montage d'un rotor selon l'une quelconque des revendications précédentes, ledit procédé comprenant :
une étape d'assemblage par frettage de chacun desdits supports de tête de guidage (4) sur l'arbre de rotor de part et d'autre dudit paquet de tôle (2), en même temps que l'assemblage par frettage dudit paquet de tôles (2) sur ledit l'arbre de rotor,
une étape de montage de ladite tête de guidage (3) sur chacun desdits supports de tête de guidage (4) assemblés de part et d'autre dudit paquet de tôles (2) et
une étape de bobinage de fils électriquement conducteurs autour de chaque pôle (20) par l'intermédiaire desdites têtes de guidage (3).

9. Procédé selon la revendication 8, **caractérisé en ce qu'**il comprend une étape d'équilibrage du rotor par ajout de matière dans des cavités (34) prévues sur les têtes de guidage (3) et/ou sur des zones prévues entre des bords externes respectifs de ladite face de contact (33) de ladite tête de guidage (3) et de ladite surface périphérique (42) dudit support de tête de guidage (4), ledit bord externe (42a) de ladite surface périphérique (42) dudit support de tête de guidage (4) dépassant axialement ledit bord externe (33a) de ladite face de contact (33) de ladite tête de guidage.

## Patentansprüche

1. Rotor (1) für eine elektrische Synchronmaschine vom Typ mit gewickeltem Rotor, aufweisend eine Rotorwelle, die dazu bestimmt ist, um ihre Achse drehbar angebracht zu sein, ein Blechpaket (2), das koaxial auf der Rotorwelle angebracht ist, wobei das Blechpaket eine Mehrzahl von Polen (20), die radial hervorstehen, und wenigstens eine axiale Öffnung aufweist, wobei eine Wicklung elektrisch leitender Drähte dazu bestimmt ist, um jeden Pol gewickelt zu sein, wobei Köpfe zur Führung (3) der elektrisch leitenden Drähte um jeden Pol axial beiderseits des Blechpakets angeordnet sind, wobei jeder Führungskopf (3) mit einer Mittelöffnung (32) für den Durchtritt der Welle versehen ist, wobei der Rotor einen Führungskopfhalter (4) umfasst, der zwischen dem Blechpaket (2) und jedem Führungskopf (3) so eingefügt ist, dass eine radiale Innenfläche (41) des Halters (4) an einer radialen Außenfläche eines Axialendes des Blechpakets (2) anliegt, und wobei eine Umfangsfläche (42) des Halters, die von seiner radialen Innenfläche axial nach außen hervorsteht, mit einer Kontaktfläche (33) des Führungskopfes (3) in Kontakt steht, die radial zum Äußeren desselben orientiert ist, so dass der Führungskopf radial an die Umfangsfläche (42) des Halters (4) anstößt, wobei der Rotor **dadurch gekennzeichnet ist, dass** der Führungskopfhalter (4) durch Warmaufziehen auf der Rotorwelle befestigt ist.

2. Rotor nach Anspruch 1, **dadurch gekennzeichnet, dass** der Führungskopf (3) durch Warmaufziehen auf dem Führungskopfhalter befestigt ist.

3. Rotor nach einem der vorhergehenden Ansprüche, **dadurch gekennzeichnet, dass** der Führungskopf (3) durch Warmaufziehen auf der Rotorwelle befestigt ist.

4. Rotor nach einem der vorhergehenden Ansprüche, **dadurch gekennzeichnet, dass** die Umfangsfläche (42) des Führungskopfhalters (4) einen Außenrand (42a) aufweist, der geeignet ist, axial über einen Außenrand (33a) der Kontaktfläche (33) des Führungskopfes (3) hinauszuragen, so dass die Hinzufügung von Auswuchtgewichten in einem Bereich, der sich zwischen den jeweiligen Außenrändern der Kontaktfläche (33) des Führungskopfes (3) und der Umfangsfläche (42) des Führungskopfhalters (4) befindet, zur Auswuchtung des Rotors ermöglicht wird.

5. Rotor nach einem der vorhergehenden Ansprüche, **dadurch gekennzeichnet, dass** jeder Führungskopf (3) auf einer Außenfläche desselben, die dem Führungskopfhalter (4) im Verhältnis zum Führungskopf (3) gegenüberliegt, mit Hohlräumen (34) versehen ist, die in Umfangsrichtung verteilt sind, die axial zum Äußeren des Führungskopfes hin offen sind, wobei die Hohlräume (34) geeignet sind, Auswuchtgewichte zur Auswuchtung des Rotors aufzunehmen.

6. Rotor nach Anspruch 5, **dadurch gekennzeichnet, dass** sich, jeder Führungskopf (3) eine Mehrzahl von Schenkeln (30) umfassend, die sich radial von einem zylinderförmigen Mittelkern (31) erstrecken, der mit der Mittelöffnung (32) versehen ist, jeder der Hohlräume (34) in Umfangsrichtung zwischen zwei Schenkeln (30) des Führungskopfes (3) erstreckt.

7. Rotor nach einem der vorhergehenden Ansprüche, **dadurch gekennzeichnet, dass** der Führungskopfhalter (4) aus einem einstückigen Teil aus einer Aluminium- oder Stahllegierung hergestellt ist.

8. Verfahren zur Montage eines Rotors nach einem der vorhergehenden Ansprüche, das Verfahren umfassend:
einen Schritt des Anfügens durch Warmaufziehen jedes der Führungskopfhalter (4) auf der Rotorwelle beiderseits des Blechpakets (2) zur gleichen Zeit wie das Anfügen durch Warmaufziehen des Blechpakets (2) auf der Rotorwelle,
einen Schritt des Anbringens des Führungskopfes (3) auf jedem der Führungskopfhalter (4), die beiderseits des Blechpakets (2) angefügt sind, und
einen Schritt des Wickelns von elektrisch leitenden Drähten um jeden Pol (20) mittels der Führungsköpfe (3).

9. Verfahren nach Anspruch 8, **dadurch gekennzeichnet, dass** es einen Schritt des Auswuchtens des Rotors durch Hinzufügung von Material in Hohlräume (34), die auf den Führungsköpfen (3) vorgesehen sind, und/oder auf Bereiche, die zwischen den jeweiligen Außenrändern der Kontaktfläche (33) des Führungskopfes (3) und der Umfangsfläche (42) des Führungskopfhalters (4) vorgesehen sind, umfasst, wobei der Außenrand (42a) der Umfangsfläche (42) des Führungskopfhalters (4) axial über den Außenrand (33a) der Kontaktfläche (33) des Führungskopfes hinausragt.

## Claims

1. Rotor (1) for a wound rotor-type synchronous electric machine, including a rotor shaft intended to be rotationally mounted around the axis thereof, an assembly of laminations (2) mounted coaxially on the rotor shaft, said assembly of laminations including a plurality of radially salient poles (20) and at least one axial opening, a winding of electrically conductive wires being intended to be wrapped around each pole, guide heads (3) for guiding the electrically conductive wires around each pole being arranged axially on either side of the assembly of laminations, each guide head (3) being supplied with a central orifice (32) for passage of the shaft, wherein said rotor comprises a guide head support (4) inserted between said assembly of laminations (2) and each guide head (3) such that an internal radial face (41) of said support (4) bears against an axial end external radial face of said assembly of laminations (2), and wherein a peripheral surface (42) of said support projecting axially outward from the internal radial face thereof is in contact with a contact face (33) of said guide head (3) oriented radially toward the outside thereof, such that said guide head radially abuts against said peripheral surface (42) of said support (4), said rotor being **characterized in that** said guide head support (4) is shrink-fitted onto the rotor shaft.

2. Rotor according to Claim 1, **characterized in that** said guide head (3) is shrink-fitted onto said guide head support.

3. Rotor according to either one of the preceding claims, **characterized in that** said guide head (3) is shrink-fitted onto the rotor shaft.

4. Rotor according to any one of the preceding claims, **characterized in that** said peripheral surface (42) of said guide head support (4) has an external edge (42a) suitable for axially jutting out beyond an external edge (33a) of said contact face (33) of said guide head (3), such as to allow the addition of balancing masses in an area located between the respective external edges of said contact face (33) of said guide head (3) and of said peripheral surface (42) of said guide head support (4), in order to balance the rotor.

5. Rotor according to any one of the preceding claims, **characterized in that** each guide head (3) is provided, on an external face thereof, away from said guide head support (4) with respect to said guide head (3), with circumferentially distributed cavities (34), open axially toward the outside of said guide head, said cavities (34) being suitable for receiving balancing masses in order to balance the rotor.

6. Rotor according to Claim 5, **characterized in that**, since each guide head (3) comprises a plurality of branches (30) extending radially from a central cylindrical core (31) provided with said central orifice (32), each of said cavities (34) extends circumferentially between two branches (30) of said guide head (3).

7. Rotor according to any one of the preceding claims, **characterized in that** said guide head support (4) is produced as a unitary piece, made from an aluminium or steel alloy.

8. Method of mounting a rotor according to any one of the preceding claims, said method comprising:
a step for shrink-fitting each of said guide head supports (4) onto the rotor shaft on either side of said assembly of laminations (2), at the same time as shrink-fitting said assembly of laminations (2) onto said rotor shaft,
a step for mounting said guide head (3) on each of said guide head supports (4) which are assembled on either side of said assembly of laminations (2) and
a step for winding electrically conductive wires around each pole (20) via said guide heads (3).

9. Method according to Claim 8, **characterized in that** it includes a step for balancing the rotor by adding material into cavities (34) provided on the guide heads (3) and/or on areas provided between respective external edges of said contact face (33) of said guide head (3) and of said peripheral surface (42) of said guide head support (4), said external edge (42a) of said peripheral surface (42) of said guide head support (4) axially jutting out beyond said external edge (33a) of said contact face (33) of said guide head.
